# FASCICULE DE BREVET EUROPEEN

(11) **EP 1 138 186 B1**
(45) Date de publication et mention de la délivrance du brevet: **05.11.2003**
(21) Numéro de dépôt: 01440089.9
(22) Date de dépôt: 27.03.2001
(51) Int. Cl.: A01C 7/08, A01C 7/20, A01C 7/18

(54) **Dispositif d'implantation de graines dans le sol et semoir équipé de tels dispositifs**
Sävorrichtung und Sämaschine mit solchen Sävorrichtungen
Seed planting device and seed drill using such devices

(30) Priorité: 28.03.2000 FR 0003906
(43) Date de publication de la demande: 04.10.2001
(73) Titulaire: KUHN S.A., 67706 Saverne Cedex (FR)
(72) Inventeur: Kleinknecht, Christoph, 72525 Münsingen (DE); Müller, Joachim, 72631 Aichtal (DE); Klein, Jean, 67330 Dossenheim-sur-Zinsel (FR)
(74) Mandataire: Andres, Jean-Claude

(56) Documents cités:
- EP-A- 0 829 193
- US-A- 3 964 639
- US-A- 4 669 922
- US-A- 5 392 722

## Description

La présente invention se rapporte à un dispositif d'implantation de graines dans le sol comportant un orifice d'entrée qui est relié à un tuyau par lequel arrive un flux d'air transportant des graines, un orifice de sortie par lequel lesdites graines sont implantées dans le sol et un dispositif de séparation desdites graines du flux d'air les transportant.

L'invention se rapporte également à un semoir pneumatique équipé de dispositifs d'implantation de graines dans le sol tels que décrits ci-dessus.

Un tel dispositif d'implantation est connu dans la demande de brevet EP 080 912. Le dispositif de séparation des graines du flux d'air est constitué par un cyclone. Ce cyclone se situe à l'extrémité d'un tuyau qui y débouche tangentiellement. Le flux d'air transportant les graines arrive par ce tuyau. Le cyclone comporte à sa partie supérieure un orifice par lequel s'échappe l'air. Il est prolongé vers le bas par une tubulure à travers laquelle les graines tombent par gravité dans le sol. Elles ne sont ainsi plus projetées à terre par le flux d'air.

Un tel cyclone est volumineux. Il est complexe et coûteux à réaliser. En sus, pour optimiser son fonctionnement il faudrait utiliser un cyclone spécialement adapté à la taille de chaque sorte de graines ce qui n'est guère possible en pratique.

Le brevet US-5 392 722 se rapporte à un tube séparateur d'air sur un semoir pneumatique. Ce tube fait passer les graines d'un réservoir principal vers un réservoir individuel à partir duquel les graines sont acheminées vers le sol. Il possède un coude avec une grille qui permet à l'air de sortir.

La présente invention a pour but de proposer un dispositif d'implantation de graines dans le sol avec un dispositif de séparation des graines du flux d'air qui est simple, économique et facilement utilisable pour toutes sortes de graines habituellement semées par les agriculteurs.

A cet effet, une importante caractéristique de l'invention consiste en ce que le dispositif de séparation comporte une grille qui se situe sensiblement dans le prolongement dudit orifice d'entrée du flux d'air avec les graines et un déflecteur qui dirige le flux d'air et de graines vers la grille de sorte qu'un maximum d'air s'échappe du dispositif d'implantation à travers celle-ci et que les graines soient retenues. Lesdites graines restent dans le dispositif d'implantation et tombent dans la terre sous l'effet de leur propre poids et sans rebondir.

Ladite grille peut présenter une face inclinée coupant la direction du flux d'air. Cette disposition facilite la sortie de l'air du dispositif d'implantation. Avantageusement une partie au moins de la grille épouse au plus près la forme de l'orifice d'entrée du flux d'air afin d'éviter que des graines puissent sortir du dispositif d'implantation ailleurs que par l'orifice de sortie.

Une autre importante caractéristique de l'invention consiste en ce que le dispositif de séparation est amovible.

Le dispositif de séparation comporte également avantageusement une coiffe qui entoure au moins partiellement la grille. Cette coiffe protège ladite grille et canalise une grande partie de l'air échappée du dispositif d'implantation vers l'arrière de la machine.

Selon une autre caractéristique de l'invention le dispositif d'implantation comporte en sus un dispositif de régulation qui assure un espacement sensiblement constant entre les graines qui sortent par son orifice de sortie. Ce dispositif se situe avantageusement sensiblement à la verticale de la grille. Il comporte des éléments de guidage disposés en zigzag. Il peut être interchangeable afin de l'adapter au type (à une famille) de graines à semer.

D'autres caractéristiques et avantages de l'invention ressortiront de la description qui va suivre et qui se réfère aux dessins annexés qui représentent, à titre d'exemples non limitatifs, quelques formes de réalisation de l'invention. Dans ces dessins :
- la figure 1 représente une vue latérale d'une machine agricole combinée de travail du sol et de semis attelée à un tracteur et comportant des dispositifs d'implantation de la semence dans le sol conformes à l'invention,
- la figure 2 représente, à plus grande échelle, un exemple de réalisation d'un dispositif d'implantation,
- la figure 3 représente une coupe suivant le plan III-III de la figure 2,
- la figure 4 représente une coupe suivant le plan IV-IV de la figure 2,
- la figure 5 représente un autre exemple de réalisation du dispositif d'implantation.

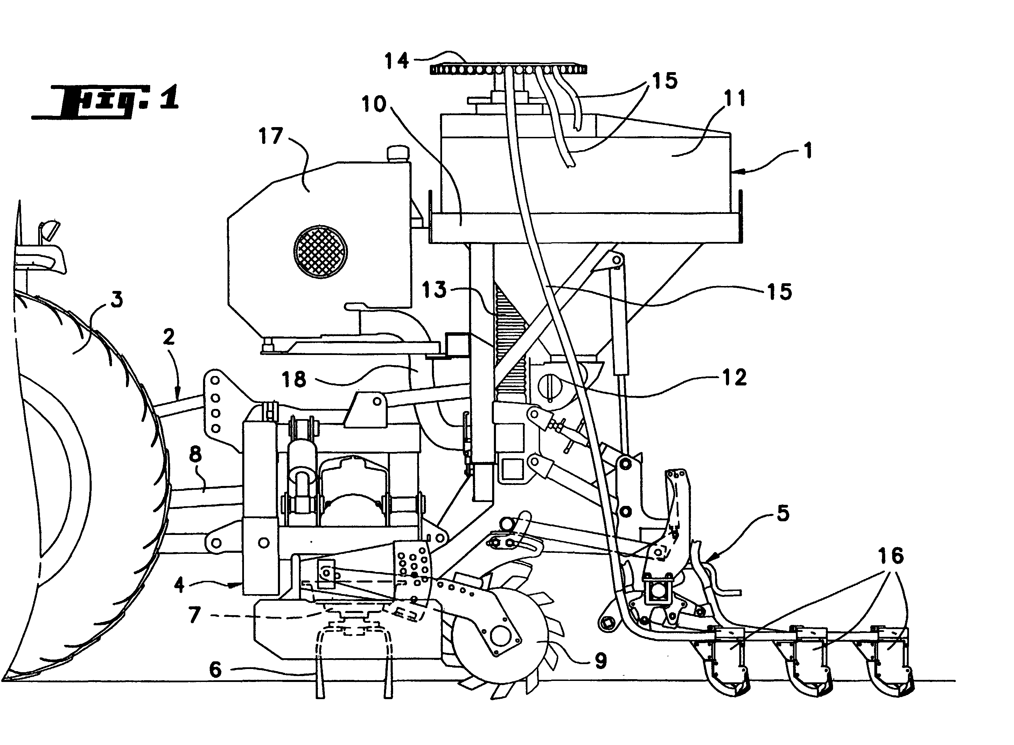

Telle qu'elle est représentée sur la figure 1, la machine agricole combinée de travail du sol et de semis (1) est accouplée à l'attelage arrière (2) d'un tracteur (3). Cette machine se compose d'un appareil (4) de préparation d'un lit de semence et d'un semoir (5).

L'appareil (4) de préparation d'un lit de semence est une herse rotative. Elle comporte des outils animés (6) qui sont entraînés en rotation au moyen de roues dentées placées dans un carter (7). Celles-ci sont entraînées à partir d'un arbre de prise de force (non représenté) du tracteur (3) par l'intermédiaire d'un arbre de transmission (8) à cardans. A l'arrière des outils (6) est disposé un rouleau (9) pour tasser la terre travaillée.

Le semoir (5) comporte un bâti (10) qui est relié à l'appareil (4) de préparation du lit de semence. Ce bâti (10) porte une trémie (11) contenant la semence. Cette trémie (11) comporte à sa base un système de dosage (12) des semences. Celui-ci communique avec une colonne d'alimentation (13) qui débouche dans une tête de distribution (14) de laquelle partent des tuyaux (15) menant à des dispositifs d'implantation (16) des graines qui sont disposés à l'arrière du rouleau (9) sur toute la largeur de la machine. Ces dispositifs d'implantation (16) se situent sur trois rangs et sont espacés de telle sorte qu'il y a des intervalles assez réguliers entre les lignes sur lesquelles sont déposées les graines. Le bâti (10) du semoir (5) porte en plus une soufflerie (17) qui produit un flux d'air. Celui-ci est amené à l'aide d'un conduit (18) à la base de la colonne d'alimentation (13). Ce flux entraîne alors les graines en provenance du système de dosage (12) jusqu'à la tête de distribution (14) dans laquelle il se divise en plusieurs flux qui s'engagent avec des graines dans les tuyaux (15).

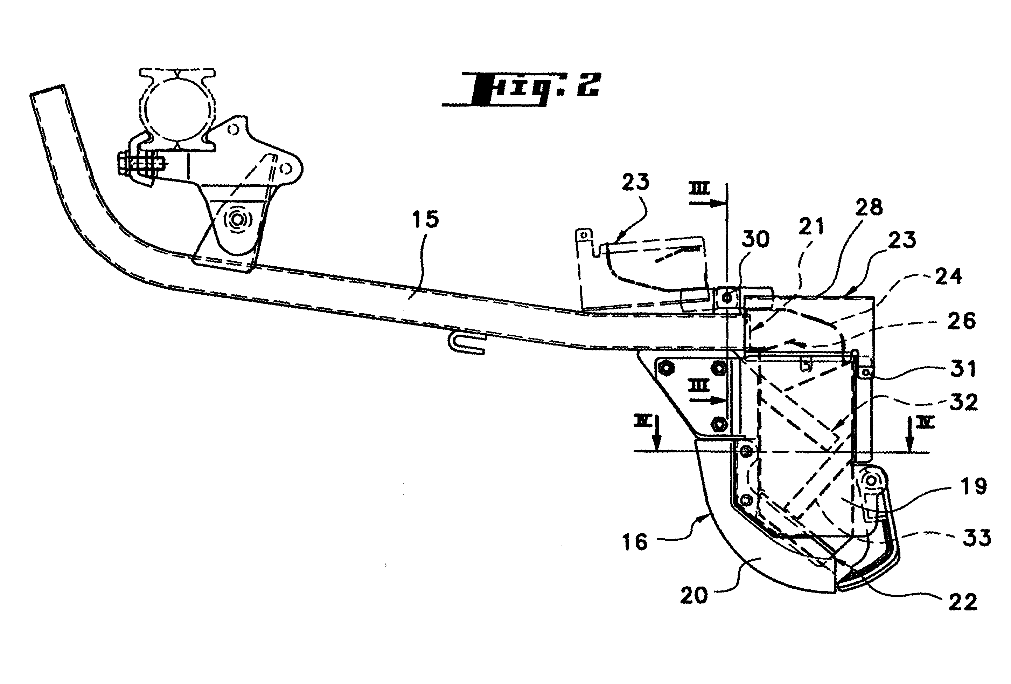

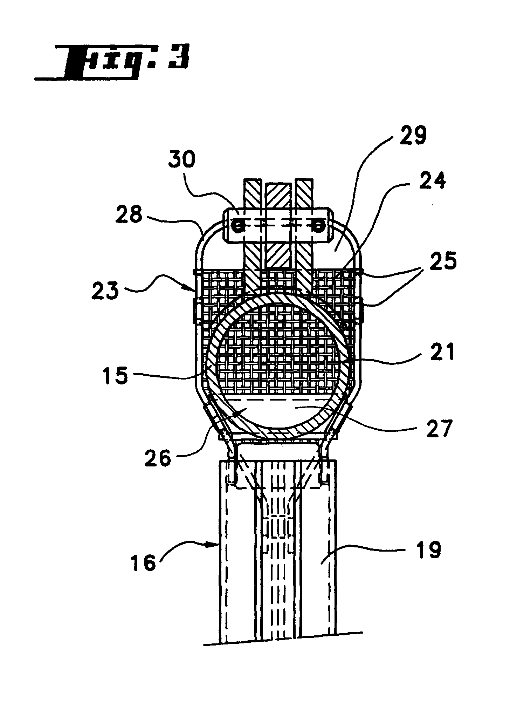

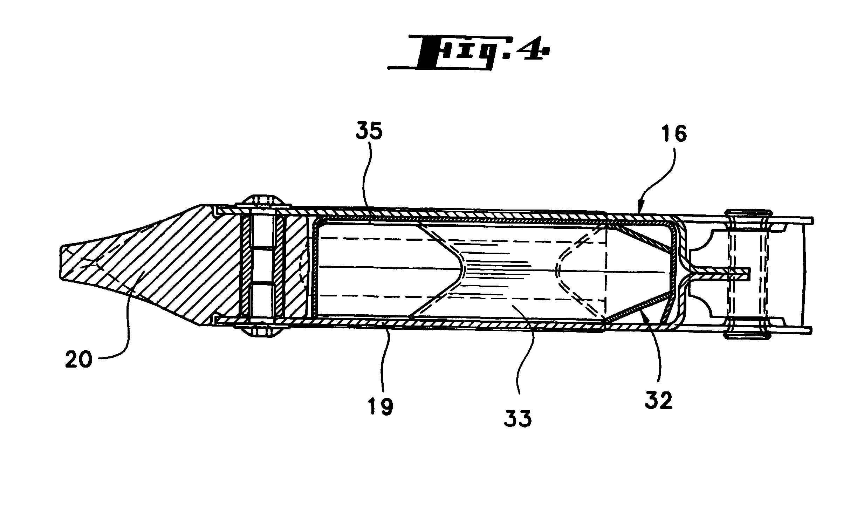

Chaque dispositif d'implantation (16) est formé par un corps creux (19) en forme de tube de section rectangulaire (figures 2 et 4). Sa face avant et sa base comportent une pièce effilée (20) de manière à pouvoir ouvrir une petite tranchée dans la terre. La partie supérieure de chaque dispositif d'implantation (16) possède un orifice d'entrée (21) qui est relié à un tuyau (15) et par lequel arrive le flux d'air transportant des graines. La partie inférieure de chaque dispositif d'implantation (16) possède un orifice de sortie (22) par lequel lesdites graines sont implantées dans le sol. Chaque dispositif d'implantation (16) comporte entre l'entrée (21) et la sortie (22) un dispositif de séparation (23) desdites graines du flux d'air les transportant. Ce dispositif de séparation (23) comporte une grille (24) pouvant être réalisée en fils métalliques et au travers de laquelle s'échappe ledit flux d'air. Cette grille (24) présente des mailles dont les dimensions sont inférieures à celles des graines de sorte que ces dernières soient retenues à l'intérieur du dispositif d'implantation (16). Ladite grille (24) est située sensiblement dans le prolongement dudit orifice d'entrée (21) pour favoriser la sortie immédiate de l'air. Elle présente une face inclinée coupant la direction du flux d'air. Une partie au moins de cette grille (24) épouse au plus près la forme dudit orifice d'entrée (21) afin d'éviter que des graines puissent sortir du dispositif d'implantation (16) ailleurs que par l'orifice de sortie (22) (voir figure 3).

Tel que cela est représenté sur la figure 3, la grille (24) constitue une pièce interchangeable. Elle comporte des pattes (25) qui permettent de la fixer et de la détacher facilement du dispositif d'implantation (16). Si nécessaire, l'utilisateur peut ainsi mettre en place des grilles parfaitement adaptées aux différents types de graines à semer. Cela est aisément faisable en raison du faible encombrement des grilles (24) et du mode de montage/démontage qui est très rapide.

Le dispositif de séparation (23) de chaque dispositif d'implantation (16) comporte en sus un dispositif de canalisation (26) qui dirige le flux d'air et de graines vers la grille (24). Ce dispositif de canalisation (26) comporte un déflecteur (27) qui répartit le flux d'air et de graines sur une grande partie de la surface de la grille (24). Il se situe dans le prolongement de la partie basse de l'orifice d'entrée (21) et s'étend vers l'arrière et vers le haut en direction de la grille (24). La quasi totalité de l'air est ainsi directement guidée vers ladite grille pour qu'elle s'échappe à travers elle.

Le dispositif de séparation (23) comporte en sus une coiffe (28) qui entoure partiellement la grille (24). Cette coiffe (28) présente notamment une ouverture (29) vers l'arrière par laquelle sort le flux d'air. Dans l'exemple de la figure 3 elle sert de support à la grille (24). Elle assure également une protection contre les corps étrangers qui pourraient abîmer ou boucher la grille (24).

L'ensemble constituant le dispositif de séparation (23) est avantageusement amovible. On voit sur ces figures 2 et 3 qu'il est articulé au moyen d'un axe (30) sur l'extrémité du tuyau (15). Il pourrait aussi être articulé directement sur le dispositif d'implantation (16). L'axe d'articulation (30) se situe sensiblement au-dessus de l'orifice d'entrée (21) du dispositif d'implantation (16). Le dispositif de séparation (23) peut ainsi être basculé vers le haut dans la position représentée en traits mixtes sur la figure 2, ce qui donne accès à l'intérieur du dispositif d'implantation (16). Ledit dispositif de séparation (23) peut être bloqué en position fermée de travail au moyen d'un verrou (31) qui s'étend à travers des orifices prévus dans des pattes situées sur le dispositif de séparation (23) et sur le corps (19) du dispositif d'implantation (16).

Le dispositif d'implantation (16) comporte en sus un dispositif de régulation (32) qui assure un espacement sensiblement constant entre les graines sortant de l'orifice de sortie (22). Ce dispositif de régulation (32) est disposé dans le corps (19), sensiblement à la verticale sous la grille (24). Il comporte des éléments de guidage (33) tels que des gouttières, qui sont disposés en zigzag depuis la grille (24) jusqu'à l'orifice de sortie (22). Comme cela est représenté sur la figure 4, les éléments de guidage (33) ont une section transversale en forme de V avec un fond arrondi.

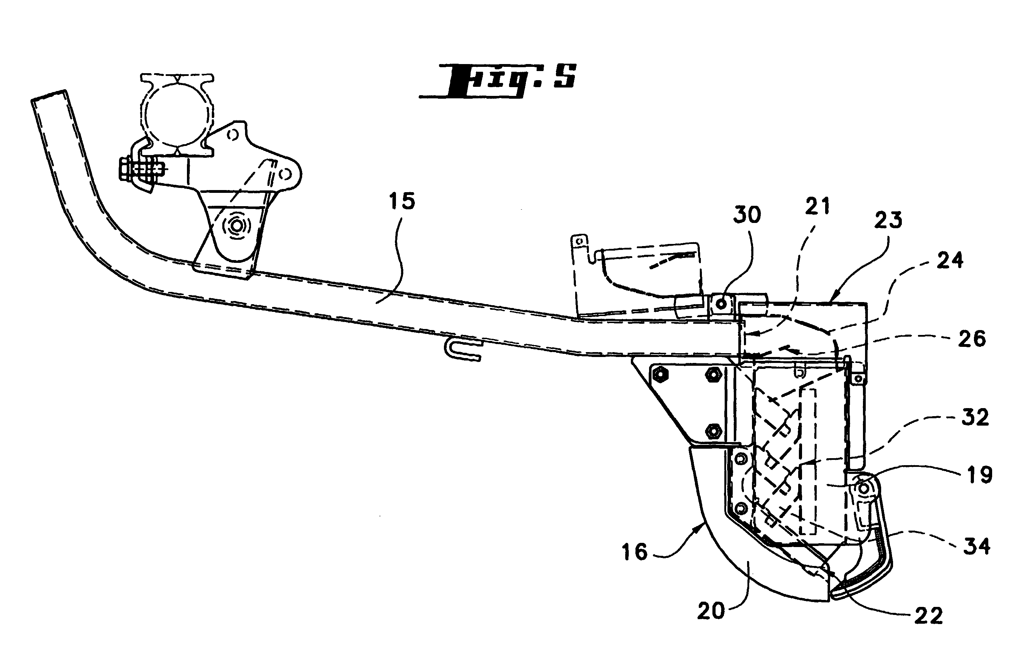

Le dispositif de régulation (32) est avantageusement interchangeable, ce qui permet de l'adapter aux familles de graines à semer. Sur l'exemple de la figure 2, les éléments de guidage (33) sont peu nombreux et s'étendent sur pratiquement toute la largeur du corps (19). De plus, le fond arrondi est relativement large. Ce type d'éléments de guidage convient parfaitement pour le semis de graines de gros diamètre telles que les pois. L'exemple de réalisation du dispositif de régulation (32) qui est représenté sur la figure 5 comporte davantage d'éléments de guidage (34) en forme de gouttières. Ces éléments (34) ont une longueur réduite et n'occupent ainsi que la moitié de la largeur du corps (19). Ils conviennent notamment pour le semis de graines de petites dimensions. L'arrondi dans le fond de chaque élément de guidage peut être moins important afin de mieux canaliser les graines. Les extrémités de ces éléments de guidage (34) sont également plus proches les unes des autres pour éviter le rebondissement des graines lors du passage de l'un à l'autre.

Les éléments de guidage (33, 34) peuvent être assemblés pour former des sortes de cassettes (35) sensiblement de même forme que les corps (19) des dispositifs d'implantation (16). Ils peuvent ainsi se glisser entre les parois latérales desdits corps (19).

Dans le cadre de l'invention l'appareil de préparation du lit de semence (4) et le semoir (5) pourront être différents de ceux décrits ci-dessus. Il est également possible que les dispositifs d'implantation (16) de semence équipent un semoir (5) utilisé en solo.

Au travail, la machine agricole selon la figure 1 est accrochée au tracteur (3) qui permet de la déplacer sur un champ et de l'animer. Les outils (6) de l'appareil (4) sont enfoncés dans le sol et sont entraînés en rotation. Ils ameublissent alors la terre dans laquelle seront déposées les graines. Le rouleau (9) se déplace sur la terre. Il écrase les mottes, tasse la terre et égalise sa surface. Les dispositifs d'implantation (16) ouvrent de petits sillons dans la terre dans lesquels se déposent les graines. Celles-ci passent de la trémie (11) dans la colonne d'alimentation (13) en passant par le doseur (12). Dans ladite colonne (13) elles sont entraînées par le flux d'air produit par la soufflerie (17). Ce flux arrive dans la tête (14) qui assure une distribution vers les tuyaux (15). Dans ces derniers les graines sont emmenées jusqu'aux orifices d'entrée (21) des dispositifs d'implantation (16). Dans chacun de ceux-ci le flux d'air et les graines rencontrent le déflecteur (27) qui les dirige vers la grille (24) et les répartit sur une grande partie de sa surface. Celle-ci laisse passer la totalité de l'air mais retient les graines qui tombent sous l'effet de leur propre poids dans le dispositif de régulation (32). Ces graines glissent alors d'un élément de guidage (33, 34) dans le suivant jusqu'à l'orifice de sortie (22) où elles touchent le sol. Elles arrivent ainsi à des intervalles constants et à faible vitesse. Cela évite qu'elles roulent encore sur le sol et permet d'obtenir d'une manière simple un semis régulier.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini dans les revendications.

## Revendications

1. Dispositif d'implantation de graines dans le sol, comportant un orifice d'entrée (21) qui est relié à un tuyau (15) par lequel arrive un flux d'air transportant des graines, un orifice de sortie (22) par lequel lesdites graines sont implantées dans le sol et un dispositif de séparation (23) desdites graines du flux d'air les transportant, ***caractérisé par le fait* que** ledit dispositif de séparation (23) comporte une grille (24) qui se situe sensiblement dans le prolongement dudit orifice d'entrée (21) du flux d'air avec les graines et un déflecteur (27) qui dirige le flux d'air et de graines vers la grille (24) de sorte qu'un maximum d'air s'échappe à travers celle-ci et que les graines soient retenues.

2. Dispositif d'implantation de graines dans le sol selon la revendication 1, ***caractérisé par le fait* qu'**une partie au moins de ladite grille (24) épouse au plus près la forme dudit orifice d'entrée (21) afin d'éviter que des graines puissent sortir dudit dispositif d'implantation (16) ailleurs que par l'orifice de sortie (22).

3. Dispositif d'implantation de graines dans le sol selon la revendication 1 ou 2, ***caractérisé par le fait* que** la grille présente une face inclinée coupant la direction du flux d'air.

4. Dispositif d'implantation de graines dans le sol selon la revendication 1, 2 ou 3, ***caractérisé par le fait* que** la grille (24) est interchangeable avec d'autres grilles adaptées aux différents types de graines à semer.

5. Dispositif d'implantation de graines dans le sol selon la revendication 1, ***caractérisé par le fait* que** le déflecteur (27) répartit le flux d'air et de graines sur une grande partie de la surface de la grille (24).

6. Dispositif d'implantation de graines dans le sol selon la revendication 1 ou 5, ***caractérisé par le fait* que** ledit déflecteur (27) se situe dans le prolongement de la partie basse de l'orifice d'entrée (21).

7. Dispositif d'implantation de graines dans le sol selon la revendication 1, 5 ou 6, ***caractérisé par le fait* que** ledit déflecteur (27) s'étend vers l'arrière et vers le haut en direction de ladite grille (24).

8. Dispositif d'implantation de graines dans le sol selon l'une quelconque des revendications 1 à 7, ***caractérisé par le fait* que** ledit dispositif de séparation (23) est amovible.

9. Dispositif d'implantation de graines dans le sol selon la revendication 8, ***caractérisé par le fait* que** ledit dispositif de séparation (23) est lié à un organe du (solidaire du) dispositif d'implantation au moyen d'une articulation (30).

10. Dispositif d'implantation de graines dans le sol selon la revendication 9, ***caractérisé par le fait* que** ladite articulation (30) est située sensiblement au-dessus dudit orifice d'entrée (21).

11. Dispositif d'implantation de graines dans le sol selon la revendication 9 ou 10, ***caractérisé par le fait* que** le pivotement du dispositif de séparation (23) autour de ladite articulation (30) est condamné au moyen d'un verrou (31).

12. Dispositif d'implantation de graines dans le sol selon l'une quelconque des revendications 1 à 11, ***caractérisé par le fait* que** ledit dispositif de séparation (23) comporte en sus une coiffe (28) qui entoure au moins partiellement ladite grille (24).

13. Dispositif d'implantation de graines dans le sol selon l'une quelconque des revendications 1 à 12, ***caractérisé par le fait* qu'**il comporte en sus un dispositif de régulation (32) qui assure un espacement sensiblement constant entre lesdites graines sortant dudit orifice de sortie (22).

14. Dispositif d'implantation de graines dans le sol selon la revendication 13, ***caractérisé par le fait* que** ledit dispositif de régulation (32) est disposé sensiblement à la verticale sous ladite grille (24).

15. Dispositif d'implantation de graines dans le sol selon la revendication 13 ou 14, ***caractérisé par le fait* que** ledit dispositif de régulation (32) comporte des éléments de guidage (33, 34) disposés en zigzag.

16. Dispositif d'implantation de graines dans le sol selon la revendication 15, ***caractérisé par le fait* que** lesdits éléments de guidage (33, 34) ont une section transversale en forme de "V".

17. Dispositif d'implantation de graines dans le sol selon la revendication 16, ***caractérisé par le fait* que** le fond du "V" est arrondi.

18. Dispositif d'implantation de graines dans le sol selon l'une quelconque des revendications 13 à 17, ***caractérisé par le fait* que** ledit dispositif de régulation (32) est interchangeable afin d'adapter ledit dispositif d'implantation (16) au type (à une famille) de graines à semer.

19. Dispositif d'implantation de graines dans le sol selon l'une quelconque des revendications 1 à 18, ***caractérisé par le fait* qu'**il comporte un corps creux (19) avec deux parois latérales qui s'étendent vers le bas.

20. Dispositif d'implantation de graines dans le sol selon la revendication 19, ***caractérisé par le fait* que** ledit dispositif de régulation (32) peut être glissé entre lesdites parois latérales du corps creux (19).

21. Semoir pneumatique comportant au moins un dispositif d'implantation de graines dans le sol selon l'une des revendications 1 à 20.

## Patentansprüche

1. Vorrichtung zum Einbringen von Saatgut in den Boden mit einer mit einer Röhre (15) verbundenen Eintrittsöffnung (21), durch die ein das Saatgut transportierender Luftstrom ankommt, einer Austrittsöffnung (22), durch die das Saatgut in den Boden eingebracht wird, und einer Vorrichtung (23) zur Trennung des Saatguts von dem es transportierenden Luftstrom, ***dadurch gekennzeichnet,* dass** die Trennvorrichtung (23) ein Gitter (24), das sich im Wesentlichen in der Verlängerung der Eintrittsöffnung (21) des Luftstroms mit dem Saatgut befindet, und eine Leitvorrichtung (27), die den Luftstrom und das Saatgut zum Gitter (24) lenkt, so dass ein Maximum an Luft durch dieses ausströmt und das Saatgut festgehalten wird, aufweist.

2. Vorrichtung zum Einbringen von Saatgut in den Boden nach Anspruch 1, ***dadurch gekennzeichnet,* dass** mindestens ein Teil des Gitters (24) möglichst nahe an die Form der Eintrittsöffnung (21) angepasst ist, um zu vermeiden, dass das Saatgut woanders aus der Einbringvorrichtung (16) austreten kann als durch die Austrittsöffnung (22).

3. Vorrichtung zum Einbringen von Saatgut in den Boden nach Anspruch 1 oder 2, ***dadurch gekennzeichnet,* dass** das Gitter eine geneigte Fläche aufweist, die die Luftstromrichtung schneidet.

4. Vorrichtung zum Einbringen von Saatgut in den Boden nach Anspruch 1, 2 oder 3, ***dadurch gekennzeichnet,* dass** das Gitter (24) gegen andere Gitter, die an andere Saatgutarten angepasst sind, austauschbar ist.

5. Vorrichtung zum Einbringen von Saatgut in den Boden nach Anspruch 1, ***dadurch gekennzeichnet,* dass** die Leitvorrichtung (27) den Luftstrom mit dem Saatgut über einen großen Teil der Fläche des Gitters (24) verteilt.

6. Vorrichtung zum Einbringen von Saatgut in den Boden nach Anspruch 1 oder 5, ***dadurch gekennzeichnet,* dass** sich die Leitvorrichtung (27) in der Verlängerung des unteren Teils der Eintrittsöffnung (21) befindet.

7. Vorrichtung zum Einbringen von Saatgut in den Boden nach Anspruch 1, 5 oder 6, ***dadurch gekennzeichnet,* dass** sich die Leitvorrichtung (27) nach hinten und nach oben in Richtung des Gitters (24) erstreckt.

8. Vorrichtung zum Einbringen von Saatgut in den Boden nach irgend einem der Ansprüche 1 bis 7, ***dadurch gekennzeichnet,* dass** die Trennvorrichtung (23) abnehmbar ist.

9. Vorrichtung zum Einbringen von Saatgut in den Boden nach Anspruch 8, ***dadurch gekennzeichnet,* dass** die Trennvorrichtung (23) mittels eines Gelenks (30) mit einem Glied der Einbringvorrichtung (bzw. einem daran befestigten Glied) verbunden ist.

10. Vorrichtung zum Einbringen von Saatgut in den Boden nach Anspruch 9, ***dadurch gekennzeichnet,* dass** sich das Gelenk (30) im Wesentlichen über der Eintrittsöffnung (21) befindet.

11. Vorrichtung zum Einbringen von Saatgut in den Boden nach Anspruch 9 oder 10, ***dadurch gekennzeichnet,* dass** das Schwenken der Trennvorrichtung (23) um das Gelenk (30) mittels eines Riegels (31) verhindert wird.

12. Vorrichtung zum Einbringen von Saatgut in den Boden nach irgend einem der Ansprüche 1 bis 11, ***dadurch gekennzeichnet,* dass** die Trennvorrichtung (23) des Weiteren eine Abdeckung (28) aufweist, die das Gitter (24) zumindest teilweise umgibt.

13. Vorrichtung zum Einbringen von Saatgut in den Boden nach irgend einem der Ansprüche 1 bis 12, ***dadurch gekennzeichnet,* dass** sie des Weiteren eine Regelungsvorrichtung (32) aufweist, die einen im Wesentlichen gleichmässigen Abstand zwischen den die Austrittsöffnung (22) verlassenden Samen gewährleistet.

14. Vorrichtung zum Einbringen von Saatgut in den Boden nach Anspruch 13, ***dadurch gekennzeichnet,* dass** die Regelungsvorrichtung (32) im Wesentlichen senkrecht unter dem Gitter (24) angeordnet ist.

15. Vorrichtung zum Einbringen von Saatgut in den Boden nach Anspruch 13 oder 14, ***dadurch gekennzeichnet,* dass** die Regelungsvorrichtung (32) zickzackförmig angeordnete Führungselemente (33, 34) aufweist.

16. Vorrichtung zum Einbringen von Saatgut in den Boden nach Anspruch 15, ***dadurch gekennzeichnet,* dass** die Führungselemente (33, 34) einen "V"-förmigen Querschnitt aufweisen.

17. Vorrichtung zum Einbringen von Saatgut in den Boden nach Anspruch 16, ***dadurch gekennzeichnet,* dass** der Boden des "V" abgerundet ist.

18. Vorrichtung zum Einbringen von Saatgut in den Boden nach irgend einem der Ansprüche 13 bis 17, ***dadurch gekennzeichnet,* dass** die Regelungsvorrichtung (32) austauschbar ist, um die Einbringvorrichtung (16) der Art (einer Familie) des zu säenden Saatguts anzupassen.

19. Vorrichtung zum Einbringen von Saatgut in den Boden nach irgend einem der Ansprüche 1 bis 18, ***dadurch gekennzeichnet,* dass** sie einen Hohlkörper (19) mit zwei sich nach unten erstreckenden Seitenwänden aufweist.

20. Vorrichtung zum Einbringen von Saatgut in den Boden nach Anspruch 19, ***dadurch gekennzeichnet,* dass** die Regelungsvorrichtung (32) zwischen die Seitenwände des Hohlkörpers (19) geschoben werden kann.

21. Pneumatische Sämaschine mit mindestens einer Vorrichtung zum Einbringen von Saatgut in den Boden nach irgend einem der Ansprüche 1 bis 20.

## Claims

1. Device for planting seeds in the ground, comprising an inlet orifice (21) which is connected to a pipe (15) via which an airstream transporting the seeds arrives, an outlet orifice (22) via which the said seeds are planted in the ground and a device (23) for separating the said seeds from the airstream that transports them, ***characterized in* that** the said separating device (23) comprises a grating (24) which lies substantially in the continuation of the said airstream and seeds inlet orifice (21) and a deflector (27) which directs the stream of air and seeds towards the grating (24) so that as much of the air as possible escapes through this grating and the seeds are held back.

2. Device for planting seeds in the ground according to Claim 1, ***characterized in* that** at least part of the said grating (24) follows the shape of the said inlet orifice (21) as closely as possible so as to prevent the seeds from being able to leave the said planting device (16) by any route other than via the outlet orifice (22).

3. Device for planting seeds in the ground according to Claim 1 or 2, ***characterized in* that** the grating has an inclined face intersecting the direction of the airstream.

4. Device for planting seeds in the ground according to Claim 1, 2 or 3, ***characterized in* that** the grating (24) is interchangeable with other gratings tailored to suit the different types of seeds that are to be sown.

5. Device for planting seeds in the ground according to Claim 1, ***characterized in* that** the deflector (27) spreads the stream of air and seeds over a large proportion of the surface area of the grating (24).

6. Device for planting seeds in the ground according to Claim 1 or 5, ***characterized in* that** the said deflector (27) lies in the continuation of the bottom part of the inlet orifice (21).

7. Device for planting seeds in the ground according to Claim 1, 5 or 6, ***characterized in* that** the said deflector (27) extends backwards and upwards towards the said grating (24).

8. Device for planting seeds in the ground according to any one of Claims 1 to 7, ***characterized in* that** the said separating device (23) is removable.

9. Device for planting seeds in the ground according to Claim 8, ***characterized in* that** the said separating device (23) is connected to a member of (secured to) the planting device by means of a joint (30).

10. Device for planting seeds in the ground according to Claim 9, ***characterized in* that** the said joint (30) is located approximately above the said inlet orifice (21).

11. Device for planting seeds in the ground according to Claim 9 or 10, ***characterized in* that** the pivoting of the separating device (23) about the said joint (30) is prevented by means of a bolt (31).

12. Device for planting seeds in the ground according to any one of Claims 1 to 11, ***characterized in* that** the said separating device (23) additionally comprises a cap (28) which at least partially surrounds the said grating (24).

13. Device for planting seeds in the ground according to any one of Claims 1 to 12, ***characterized in* that** it additionally comprises a regulating device (32) which ensures a substantially constant spacing between the said seeds leaving the said outlet orifice (22).

14. Device for planting seeds in the ground according to Claim 13, ***characterized in* that** the said regulating device (32) is arranged substantially vertically below the said grating (24).

15. Device for planting seeds in the ground according to Claim 13 or 14, ***characterized in* that** the said regulating device (32) comprises guide elements (33, 34) arranged in a zigzag.

16. Device for planting seeds in the ground according to Claim 15, ***characterized in* that** the said guide elements (33, 34) have a V cross section.

17. Device for planting seeds in the ground according to Claim 16, ***characterized in* that** the bottom of the V is rounded.

18. Device for planting seeds in the ground according to any one of Claims 13 to 17, ***characterized in* that** the said regulating device (32) is interchangeable so that the said planting device (16) can be adapted to suit the type (family) of seeds that are to be sown.

19. Device for planting seeds in the ground according to any one of Claims 1 to 18, ***characterized in* that** it comprises a hollow body (19) with two side walls extending downwards.

20. Device for planting seeds in the ground according to Claim 19, ***characterized in* that** the said regulating device (32) can be slid between the said side walls of the hollow body (19).

21. Pneumatic seeder comprising at least one device for planting seeds in the ground according to one of Claims 1 to 20.
